# FASCICULE DE BREVET EUROPEEN

(11) **EP 0 604 290 B1**
(45) Date de publication et mention de la délivrance du brevet: **24.02.1999**
(21) Numéro de dépôt: 93403091.7
(22) Date de dépôt: 17.12.1993
(51) Int. Cl.: B60S 1/58, B60S 1/08

(54) **Dispositif de commande du fonctionnement d'un moteur électrique d'entraînement d'un balai d'essuie-glace d'une vitre arrière ouvrante d'un véhicule automobile et procédé de commande mis en oeuvre par ledit dispositif**
Vorrichtung zur Steuerung eines Elektromotors zum Antrieb eines Scheibenwischers für eine zu öffnende Heckscheibe eines Automobiles und Steuerverfahren zu deren Betrieb
Operation control device for the electric drive motor of a windscreen wiper for an opening rear window of a motor vehicle and method of operation of the device

(30) Priorité: 17.12.1992 FR 9215241; 17.12.1992 FR 9215242
(43) Date de publication de la demande: 29.06.1994
(73) Titulaire: VALEO SYSTEMES D'ESSUYAGE, 78180 Montigny-Le-Bretonneux (FR)
(72) Inventeur: Papazian, Samuel, F-86100 Chatellerault (FR); Douville, Eric, F-92700 Colombes (FR)
(74) Mandataire: Gamonal, Didier

(56) Documents cités:
- DE-A- 3 825 301
- US-A- 3 028 533
- US-A- 3 583 021
- US-A- 5 235 260
- PATENT ABSTRACTS OF JAPAN vol. 10, no. 265 (M-515)(2321) 10 Septembre 1986 & JP-A-61 089 153 (NISSAN MOTOR) 7 Mai 1986

## Description

La présente invention est relative à un dispositif de commande du fonctionnement d'un moteur électrique d'entraînement d'un balai d'essuie-glace et à un procédé de commande mis en oeuvre par ledit dispositif.

Le dispositif de commande selon l'invention peut être utilisé pour contrôler le fonctionnement d'un moteur électrique d'entraînement d'un bras d'essuie-glace d'une vitre ouvrante notamment de vitre arrière ouvrante de véhicule automobile.

On connaît déjà dans l'état de la technique un certain nombre de dispositifs de commande de ce type qui comportent une unité de commande de l'alimentation du moteur dont le fonctionnement est contrôlé par un contact de clé du véhicule et un organe de commande du fonctionnement du moteur, actionnables par un utilisateur et connectés en série entre une source d'alimentation en énergie et l'unité de commande.

Le fonctionnement de l'unité de commande est également contrôlé par des moyens de détection de l'ouverture ou de la fermeture de la vitre, utilisés comme éléments de sécurité, ces moyens de détection étant par exemple un contact inséré dans une ligne d'alimentation de l'unité de commande pour couper l'alimentation de cette unité de commande et donc du moteur, lorsqu'un utilisateur ouvre la vitre correspondante, alors que l'ensemble d'essuie-glace est en fonctionnement.

L'ouverture ou la fermeture de ce contact, interposé dans la ligne d'alimentation de l'unité de commande, permet un fonctionnement déterminé, c'est-à-dire un arrêt ou une remise en marche de l'ensemble d'essuie-glace.

Cependant, cette structure présente un certain nombre d'inconvénients, car seule une fonctionnalité simple de l'ensemble d'essuie-glace, lors de l'ouverture ou de la fermeture de la vitre, peut être réalisée d'une manière économique.

De plus, lors de la fermeture de la vitre, l'ensemble d'essuie-glace se remet automatiquement en marche, ce qui peut également présenter un danger pour l'utilisateur.

Il est par ailleurs connu du document JP-A-61-089 153 d'utiliser un relais, disposé dans le circuit d'alimentation du moteur, ledit relais coupant l'alimentation du moteur lorsqu'une ouverture de vitre est déclenchée et maintenant le moteur inhibé tant que l'utilisateur n'a pas ouvert l'interrupteur de commande du moteur d'essuie-glace, même si la vitre est fermée entre temps. Le redémarrage du moteur, après la fermeture de la vitre, se fait ensuite par une fermeture de l'interrupteur de commande par l'utilisateur.

Ce dispositif permet d'éviter les dangers dus à la remise en marche automatique de l'essuie-glace après la fermeture de la vitre. Il présente cependant un inconvénient majeur car, dès l'ouverture de la vitre, l'alimentation du moteur est coupée et le balai d'essuie-glace reste dans la position où il se trouve à cet instant.

L'invention a pour but de résoudre ces problèmes.

Elle propose à cet effet un dispositif de commande du fonctionnement d'un moteur électrique d'entraînement d'un balai d'essuie-glace d'une vitre ouvrante, notamment d'une vitre arrière d'un véhicule automobile, du type comportant une unité de commande de l'alimentation du moteur dont le fonctionnement est contrôlé par un organe de commande du fonctionnement du moteur, actionnable par un utilisateur et connecté en série entre une source d'alimentation en énergie et l'unité de commande, et un contact de détection de l'ouverture ou de la fermeture de la vitre, l'unité de commande étant adaptée à ne commander un redémarrage du moteur après ouverture et fermeture de la vitre, qu'après réinitialisation par coupure de l'organe de commande et par nouvelle action sur l'organe de commande par l'utilisateur, caractérisé en ce que l'unité de commande comporte deux sous-modules dont:
- le premier reçoit à une de ses entrées d'informations un signal signalant toute ouverture de vitre, dit signal vitre ouverte, émis par le contact de détection qui est raccordé à ladite entrée d'information, et comporte, en outre, une porte logique OU et une bascule générant un signal permettant de maintenir l'inhibition de l'alimentation du moteur jusqu'à ladite réinitialisation; et dont
- le deuxième module reçoit à une première de ses entrées ledit signal vitre ouverte, à une deuxième de ses entrées ledit signal maintenant l'inhibition et, à au moins une autre de ses entrées un signal issu de moyens de détection de la position du balai d'essuie-glace, le deuxième module étant adapté à commander l'alimentation du moteur en fonction des signaux d'entrée et, ne commandant l'inhibition du moteur, après réception du signal vitre ouverte, que lorsque le balai d'essuie-glace a été ramené à une position prédéterminée.

Divers modes de mise en oeuvre de l'invention sont spécifiés dans les revendications dépendantes 2 à 9.

D'autres caractéristiques et avantages de l'invention apparaîtront à la lecture de la description détaillée qui va suivre pour la compréhension de laquelle on se reportera aux dessins annexés dans lesquels :
- la figure 1 représente un schéma synoptique d'un dispositif de commande de l'état de la technique; et
- la figure 2 représente un schéma d'un dispositif de commande selon l'invention ;
- les figures 3a, 3b, 3c représentent des chronogrammes illustrant le fonctionnement de l'unité de commande ;
- la figure 4 représente un schéma d'un module logique de l'unité de commande.

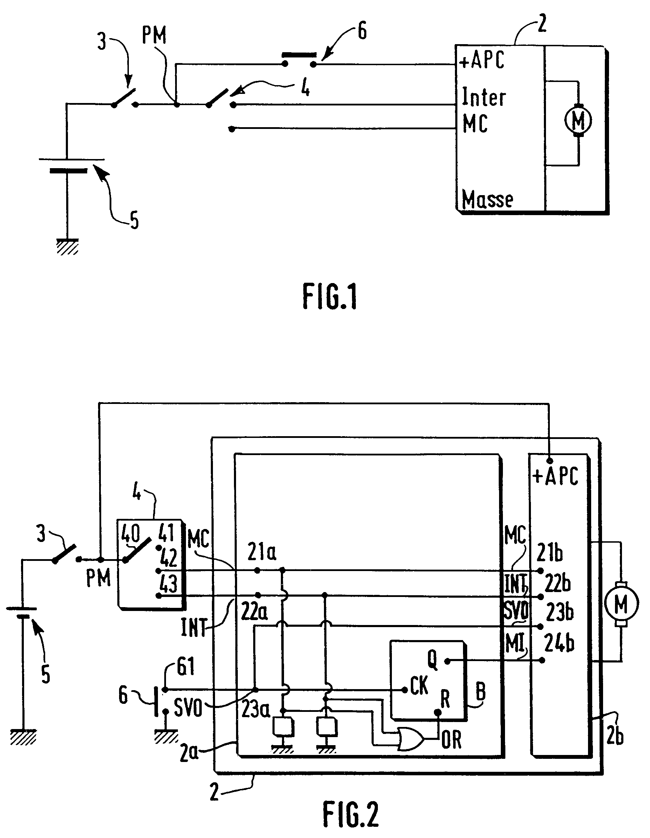

Ainsi qu'on peut le voir sur la figure 1, un tel dispositif de commande est conçu pour contrôler le fonctionnement d'un moteur électrique M d'entraînement d'un bras d'essuie-glace d'une vitre arrière ouvrante d'un véhicule automobile.

Ce dispositif comporte une unité de commande 2 de l'alimentation de ce moteur dont le fonctionnement est contrôlé en outre par un contact de clé 3 du véhicule et un organe de commande 4 du fonctionnement du moteur, actionnables par un utilisateur.

Le contact de clé 3 et l'organe de commande 4 sont connectés en série entre une source d'alimentation 5 et l'unité de commande 2.

L'organe de commande 4 peut être un organe a commandes multiples permettant par exemple de contrôler un fonctionnement intermittent ou un fonctionnement en marche continue du moteur.

Par ailleurs, le fonctionnement de cette unité de commande 2, et donc du moteur M, est également contrôlé par un contact de détection de l'ouverture ou de la fermeture de la vitre.

Le contact est désigné par la référence 6 sur la figure 1 et est interposé dans une ligne d'alimentation de l'unité de commande 2 raccordée au point milieu PM entre le contact de clé 3 du véhicule et l'organe de commande 4.

Ainsi qu'on l'a indiqué précédemment, ce dispositif présente un certain nombre d'inconvénients car le contact de détection de l'ouverture ou de la fermeture de la vitre est interposé dans la ligne d'alimentation de l'unité de commande et provoque l'arrêt et le redémarrage automatiques du moteur à la suite de l'ouverture et de la fermeture de la vitre.

La figure 2 représente un dispositif de commande selon l'invention permettant de résoudre ces problèmes. Les éléments similaires à la figure 1 sont désignés par les mêmes références dans la figure 2.

Comme il peut être constaté sur la figure 2, l'organe de commande 4 actionnable par l'utilisateur peut être représenté par un contact de commande 40 ayant trois points de contact possibles 41, 42, 43.

L'unité de commande 2 est composé de deux modules 2a et 2b.

Le module 2a a trois entrées 21a, 22a, 23a et quatre sorties connectées aux entrées 21b, 22b, 23b, 24b du module 2b qui commande l'alimentation du moteur M en fonction des signaux d'entrée appliqués, en outre, aux entrées 21b, 22b, 23b, 24b.

Les points de contact 42, 43 de l'organe 4 sont connectés respectivement aux entrées 21a, 22a du module 2a et aux entrées 21b et 22b du module 2b. Les signaux appliqués aux points 42, 21a, 21b et aux points 43, 22a, 22b sont respectivement MC (marche continue) et INT (intermittent).

Les entrées 23a et 23b sont connectées à la borne 61 du contact 6. Le signal appliqué aux points 61, 23a et 23b est SVO (signal vitre ouverte).

Les signaux MC, INT, SVO ont deux niveaux logiques possibles, le niveau logique "1" et le niveau logique "O".

MC est au niveau "1" lorsque le contact 40 est sur le point 42.

De manière comparable, INT est à "1" lorsque le contact 40 est sur le point 43.

SVO est un signal se trouvant au niveau "0" lorsque le contact 6 détecte une ouverture de la vitre sur laquelle se trouve le balai d'essuie-vitre, et est au niveau "1" lorsque la vitre est fermée.

Les entrées 21a, 22a sont reliées aux deux entrées d'une porte logique OU, un élément du module 2a, désigné comme on peut le voir sur la figure 2 par OR.

La sortie de la porte OR est connectée à l'entrée R de remise à zéro d'une bascule B du module 2a, qui à son entrée "clock", CK se voit appliqué le signal SVO. La bascule B comporte en outre une sortie Q connectée à l'entrée 24b du module 2b, délivrant un signal MI (Maintenance de l'Inhibition).

Si à l'entrée CK, le signal SVO bascule du niveau "1" au niveau "0", le signal MI à la sortie Q passe à "1" et reste à ce niveau logique jusqu'à ce que l'entrée R passe à "O", on dit qu'il y a remise à zéro de la bascule B.

Le module 2b, une unité logique à microprocesseurs, recevant les signaux MC, INT, SVO, MI, commande l'alimentation du moteur M en fonction des niveaux logiques des signaux MC, INT, SVO, MI.

Si le signal MC à l'entrée 21b est au niveau "1", le module 2b commande une alimentation du moteur M pour un fonctionnement en marche continue.

De même, en détectant à l'entrée 22b un niveau "1" du signal INT, le module commande une alimentation du moteur M permettant un fonctionnement intermittent du balai de l'essuie-vitre.

Si le signal SVO est au niveau "0", le module 2b reçoit ainsi l'ordre d'inhiber l'alimentation du moteur M. Le module 2b peut, après réception du signal SVO, ne commander l'inhibition du moteur M que lorsque le balai de l'essuie-vitre a été éventuellement ramené à une position prédéterminée. Ceci sera détaillé ultérieurement.

Par contre, lorsque le signal SVO rebascule au niveau "1" signalant ainsi une fermeture de vitre, le module 2b est amené à considérer le signal MI qui maintient l'inhibition du moteur après la fermeture de vitre. Tant que le signal MI se trouve au niveau "1", le module 2b maintient l'inhibition de l'alimentation du moteur

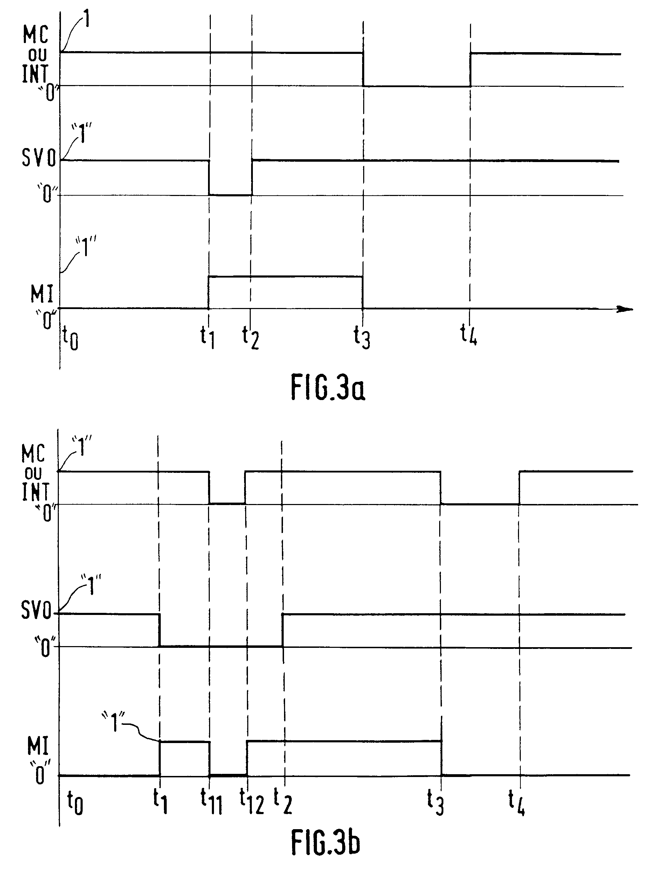

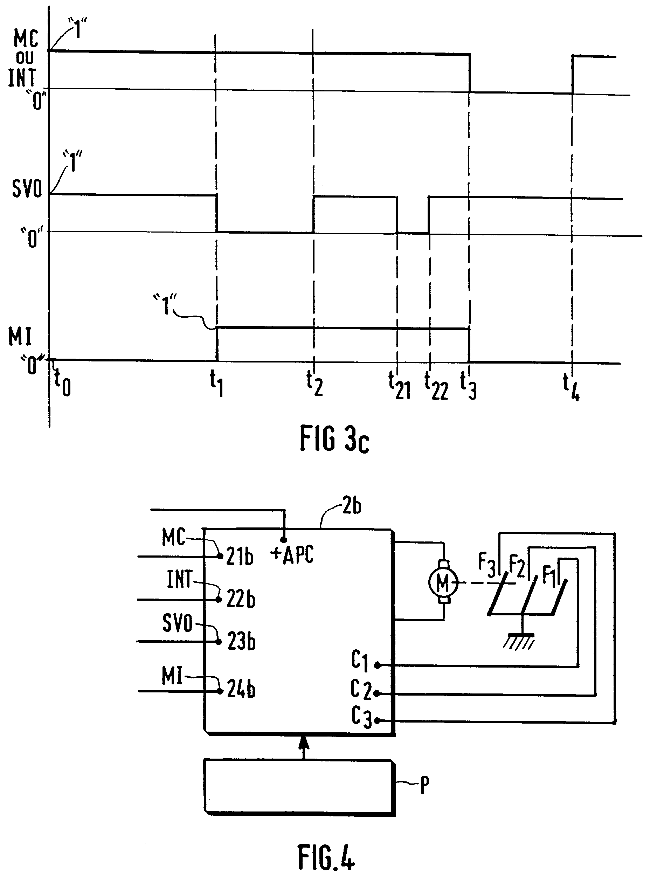

On va maintenant, en référence aux figures 3a, 3b, 3c, expliquer le fonctionnement du schéma électrique du module 2a commandant le module 2b.

Pour simplifier l'explication qui va suivre, on se place dans le cas précis où le contact clé 3 reste fermé.

Par ailleurs, le fonctionnement du moteur M peut être indifféremment en marche continue ou intermittent. Par la suite, nous fixons notre choix sur le fonctionnement en marche continue.

En référence tout d'abord à la figure 3a, à l'instant t₀, le signal MC est au niveau "1", SVO est à "1" signalant l'état fermé de la vitre, par conséquent MI reste à "0".

Cet état dure jusqu'à l'instant t₁ où le contact 6 détecte une ouverture de vitre et le signal SVO bascule au niveau "0", entraînant ainsi le passage à "1" du signal MI. Le signal SVO au niveau "0" donne ainsi l'ordre au module 2b d'inhiber l'alimentation du moteur M.

A l'instant t₂, la vitre est refermée, SVO repasse au niveau "1". Cependant on constate que le signal MI reste au niveau "1" exigeant ainsi le module 2b de maintenir l'inhibition du moteur M après T₂. Pour que MI retrouve le niveau "0" mettant ainsi fin à l'inhibition, il faut effectuer une remise à zéro au niveau de la bascule B. Ceci n'est possible que lorsque les deux entrées de la porte OR dont la sortie est reliée à l'entrée R de remise à zéro de B retombent à "0".

Par conséquent, il faut que l'utilisateur décide de couper l'organe de commande 4 en le mettant à sa position d'arrêt, c'est-à-dire positionner le contact 40 sur le point 41. En effet, à l'instant t₃ le signal MC passe à "0" entraînant une remise à zéro de la sortie Q de la bascule B, qui délivre un signal MI au niveau "0".

Après l'instant t₃, la position arrêt de l'organe de commande 4 entraîne donc l'arrêt de toute l'unité de commande 2.

A l'instant t₄, l'utilisateur décide de remettre en marche continue le dispositif d'essuie-vitre, il met le contact 40 sur le point 42, et le signal MC repasse à "1".

Autrement dit, le contact de détection 6 est raccordé à l'entrée 23a du module 2a pour que celle-ci ne commande un redémarrage du moteur M après ouverture et fermeture de la vitre, qu'après réinitialisation par coupure de l'organe de commande 4 et par nouvelle action sur l'organe de commande 4 par l'utilisateur.

En effet, l'unité de commande 2 ne provoque pas un redémarrage automatique du moteur d'entraînement de l'essuie-glace lors de la fermeture de la vitre, mais attend une réinitialisation par coupure de l'organe de commande 4 par l'utilisateur.

L'utilisateur peut ensuite déclencher un nouveau cycle de fonctionnement de ce moteur et donc du bras d'essuie-glace par une nouvelle action sur l'organe de commande 4.

Cette action de l'utilisateur sur l'organe de commande 4, après une ouverture suivie d'une fermeture de la vitre, pour commander un redémarrage du moteur M est une mesure de sécurité permettant d'écarter tout risque d'accident dû éventuellement à un redémarrage systématique, après fermeture de la vitre, du moteur M entraînant le balai d'essuie-glace.

Les chronogrammes de la figure 3b représentent un autre cas de figure dans lequel l'organe de commande 4 est mis dans la position arrêt, contact 40 sur le point 41, par l'utilisateur alors que la vitre reste ouverte. Cet évènement a lieu pendant l'intervalle VO (vitre ouverte) défini par t₁ et t₂. A la figure 3b, t₀, t₁, t₂ marquent les mêmes évènements qu'à la figure 3a.

A l'instant t1, il y a ouverture de vitre et SVO passe au niveau "0" entraînant le passage à "1" du signal MI. Par conséquent le module 2b commande l'inhibition de l'alimentation du moteur M.

A l'instant t₁₁, situé dans l'intervalle vitre ouverte VO, l'utilisateur positionne l'organe de commande 4 à sa position d'arrêt, le signal MC rebascule ainsi au niveau "0" entraînant une remise à zéro de la bascule B et le signal MI passe au niveau "0". Cependant, le module continue à maintenir l'inhibition de l'alimentation du moteur M car SVO est toujours à "0".

A l'instant t12, l'utilisateur positionne l'organe de commande 4 sur MC, contact 40 sur le point 42, MC retrouve le niveau "1" entraînant le passage de MI à "1", qui reste dans le même état jusqu'à t₂. Entre t₁₂ et t₂, le moteur M est inhibé dans les mêmes conditions qu'entre t₁ et t₁₁.

Après l'instant t₂, la situation est la même que dans le cas représenté à la figure 3a après t₂.

Les chronogrammes de la figure 3c relatent un autre cas de figure dans lequel l'évènement remarquable a lieu dans l'intervalle défini par t₂ et t₃.

A l'instant t₂, MC est toujours à "1", la vitre est refermée mais le signal MI étant à "1", l'alimentation du moteur M reste inhibée.

A l'instant t₂₁, alors que les signaux MC, MI restent dans un état identique à l'instant t₂, la vitre s'ouvre de nouveau et SVO rebascule à "0". Cependant, le signal MI reste à "1" car il n'y a pas de remise à zéro au niveau de la bascule B.

A l'instant t22, la vitre est refermée mais n'a aucune influence sur le signal MI qui impose ainsi au module 2b de maintenir l'inhibition.

Cet évènement aux instants t₂₁ et t₂₂ n'a aucune conséquence sur l'inhibition de l'alimentation du moteur M.

Autrement dit, lorsqu'un fonctionnement normal caractérisé par la mise en marche de l'organe de commande 4 sur le point 42 ou 43, alors que la vitre est fermée, est interrompu par la première ouverture de vitre, l'alimentation du moteur M est inhibée tant que la vitre reste ouverte, et ce quelle que soit l'action de l'utilisateur sur l'organe de commande 4. Par contre, lorsque cette période d'ouverture de vitre est mise fin par une fermeture de vitre, l'inhibition est maintenue jusqu'à ce qu'il y ait réinitialisation par coupure de l'organe de commande 4 et par remise en marche de l'organe de commande 4 par l'utilisateur, et ce quelle que soit l'action de l'utilisateur sur la vitre.

Ainsi, pour inhiber l'alimentation du moteur M, le module 2b scrute le signal SVO, par contre pour mettre fin à l'inhibition, le module 2b se fie au signal MI.

Lors d'une ouverture de vitre, le module 2b recevant l'ordre d'inhiber l'alimentation du moteur M donné par le signal SVO, est apte à ramener le balai d'essuie-vitre vers une position choisie avant d'inhiber l'alimentation du moteur M.

On peut envisager deux variantes possibles concernant la position du balai après la détection de l'ouverture de la vitre.

La première variante peut consister à ramener le balai à sa position d'arrêt fixe se trouvant à une extrémité de sa course, avant d'inhiber l'alimentation du moteur.

On peut aussi choisir de ramener le balai à sa position de parquage sur vitre ou hors vitre avant d'inhiber l'alimentation, ceci constitue la deuxième variante.

La figure 4, représentant le module 2b, enrichie par rapport à la figure 2, permet d'illustrer les procédés à suivre pour réaliser une des deux variantes citées ci-dessus avec le même module 2b.

Il est à savoir qu'un cycle de balayage du balai consiste en un aller et retour entre les deux positions extrêmes, l'une dite arrêt fixe et l'autre opposée arrêt fixe. Un cycle de balayage démarre à partir de la position arrêt fixe.

Comme il peut être constaté sur la figure 4, le module logique 2b comporte aussi d'autres entrées, C1,C2,C3, qui sont reliées à trois moyens de détection de la position du balai, appelés des frotteurs F1,F2,F3.

F1 est un frotteur permettant de détecter la position du balai lorsque ce dernier arrive à la position d'arrêt fixe. F2 permet de détecter la position du balai à l'opposé d'arrêt fixe, F3 permet de détecter si le balai est revenu à sa position parking se trouvant au-dessous de la position arrêt fixe, nécessitant, pour l'atteindre, une surcourse au-delà de la position arrêt fixe. Dans le cas où le balai se trouve à une des trois positions, arrêt fixe, opposé arrêt fixe, position parking, le frotteur correspondant envoie un signal ayant un niveau logique à "1" à l'entrée C1,C2,C3 auquel il est connecté. Si les trois frotteurs F1,F2,F3 envoient simultanément des signaux à "0", cela signifie que le balai se trouve dans une position intermédiaire entre les deux extrémités limitant la course du balai.

Le module 2b est une unité logique comportant des microprocesseurs, pouvant être pilotés par un programme qui est une suite d'instructions traduisant un des deux procédés permettant de réaliser une des deux variantes mentionnées plus haut.

Pour réaliser la première ou la deuxième variante, le programme P a besoin de connaître la position courante du balai pour, si nécessaire, le ramener à une position prédéterminée avant d'inhiber l'alimentation du moteur M.

Dans le cas de la première variante, où il faut ramener le balai à sa position d'arrêt fixe, si le signal à l'entrée C1 est au niveau "1", cela signifie que le balai se trouve, au moment de l'ouverture déjà à l'arrêt fixe, P peut commander une inhibition quasi immédiate de l'alimentation du moteur M.

Dans le cas contraire, l'alimentation du moteur M est maintenue jusqu'à ce que le balai soit ramené à la position arrêt fixe. On peut envisager deux possibilités.

La première consiste à interrompre le cycle de balayage et le programme P commande immédiatement un balayage en sens inverse de celui en fonctionnement au moment de l'ouverture de la vitre, pour ramener le balai à sa position arrêt fixe.

Le programme n'inhibe l'alimentation que lorsqu'il détecte un signal à "1" à l'entrée C1.

La deuxième possibilité consiste au contraire à terminer le cycle du balayage, en passant éventuellement par la position opposée arrêt fixe puis à revenir finalement à la position arrêt fixe.

De même, le programme P ne commande l'inhibition de l'alimentation que sur la réception d'un signal à "1" à l'entrée C1.

Pour réaliser la deuxième variante, le programme P scrute en particulier le signal à l'entrée C3.

Au moment où P reçoit l'information d'inhibition donnée par le signal SVO, si le signal à l'entrée C3 est à "1", P peut commander l'arrêt immédiat de l'alimentation du moteur. Sinon, P a deux possibilités semblables au cas de la première variante pour ramener le balai à la position de parquage avant l'inhibition de l'alimentation du moteur M.

La première consiste à interrompre le cycle de balayage à revenir à la position arrêt fixe et effectuer une surcourse au-delà de la position d'arrêt fixe pour atteindre la position de parquage.

La deuxième consiste à terminer le cycle de balayage. Dès que le balai revient à la position arrêt fixe, une surcourse sera effectuée pour le ramener à la position de parquage.

## Revendications

1. Dispositif de commande du fonctionnement d'un moteur électrique (M) d'entraînement d'un balai d'essuie-glace d'une vitre ouvrante, notamment d'une vitre arrière d'un véhicule automobile, du type comportant une unité de commande (2) de l'alimentation du moteur dont le fonctionnement est contrôlé par un organe de commande (4) du fonctionnement du moteur, actionnable par un utilisateur et connecté en série entre une source d'alimentation (5) en énergie et l'unité de commande, et un contact de détection (6) de l'ouverture ou de la fermeture de la vitre, l'unité de commande (2) étant adaptée à ne commander un redémarrage du moteur (M) après ouverture et fermeture de la vitre, qu'après réinitialisation par coupure de l'organe de commande (4) et par nouvelle action sur l'organe de commande par l'utilisateur, caractérisé en ce que l'unité de commande (2) comporte deux sous-modules (2a,2b) dont:
- le premier (2a) reçoit à une (23a) de ses entrées d'informations un signal signalant toute ouverture de vitre, dit signal vitre ouverte (SVO), émis par le contact de détection (6) qui est raccordé à ladite entrée (23a) d'information, et comporte, en outre, une porte logique OU (OR) et une bascule (B) générant un signal (MI) permettant de maintenir l'inhibition de l'alimentation du moteur (M) jusqu'à ladite réinitialisation; et dont
- le deuxième module (2b) reçoit à une première (23b) de ses entrées ledit signal vitre ouverte (SVO), à une deuxième (24b) de ses entrées ledit signal maintenant l'inhibition (MI), et à au moins une autre (C1, C2, C3) de ses entrées un signal issu de moyens de détection (F1, F2, F3) de la position du balai d'essuie-glace, le deuxième module étant adapté à commander l'alimentation du moteur (M) en fonction des signaux d'entrée et ne commandant l'inhibition du moteur (M), après réception du signal vitre ouverte (SVO=0),que lorsque le balai d'essuie-glace a été ramené à une position prédéterminée.

2. Dispositif selon la revendication 1, dans lequel l'unité de commande (2) de l'alimentation du moteur est contrôlée en outre par un contact de clé (3) connecté en série entre la source d'alimentation (5) et l'organe de commande (4), caractérisé en ce qu'une borne d'alimentation en énergie (+ APC) de l'unité de commande est raccordée au point milieu (PM) entre le contact de clé (3) et l'organe de commande (4).

3. Procédé de commande du fonctionnement d'un moteur électrique d'entraînement d'un balai d'essuie-glace selon la revendication 1, dans lequel un cycle de balayage consiste en un aller et retour entre deux positions extrêmes, l'une dite arrêt fixe et l'autre opposée arrêt fixe, et dont la position de parquage est située au-delà de la position arrêt fixe nécessitant une surcourse du balai pour l'atteindre, la position du balai à une des trois positions arrêt fixe, opposée arrêt fixe, et parquage étant détectée par les moyens de détection (F1,F2,F3), caractérisé en ce que, à la réception du signal d'inhibition, si les moyens de détection (F1) ne détectent pas la présence du balai à la position arrêt fixe, l'alimentation du moteur (M) est maintenue jusqu'à ce que le balai soit ramené à la position arrêt fixe.

4. Procédé selon la revendication 3, caractérisé en ce que, après la réception du signal vitre ouverte (SVO=0), le cycle de balayage est interrompu pour ramener le balai à sa position arrêt fixe avant l'inhibition de l'alimentation du moteur (M).

5. Procédé selon la revendication 3, caractérisé en ce que, après la réception du signal vitre ouverte (SVO=0), le cycle du balayage se poursuit en passant éventuellement par la position opposée arrêt fixe puis ramène finalement le balai à la position arrêt fixe, avant l'inhibition de l'alimentation du moteur (M).

6. Procédé de commande du fonctionnement d'un moteur électrique d'entraînement d'un balai d'essuie-glace selon la revendication 1, dans lequel un cycle de balayage consiste en un aller et retour entre deux positions extrêmes, l'une dite arrêt fixe et l'autre opposée arrêt fixe, et dont la position de parquage est située au-delà de la position arrêt fixe nécessitant une surcourse du balai pour l'atteindre, la position du balai à une des trois positions arrêt fixe, opposée arrêt fixe, et parquage étant détectée par les moyens de détection (F1,F2,F3), caractérisé en ce que, à la réception du signal vitre ouverte (SVO=0), si les moyens de détection ne détectent pas la présence du balai à la position de parquage, l'alimentation du moteur (M) est maintenue jusqu'à ce que le balai soit ramené à la position de parquage.

7. Procédé selon la revendication 6, caractérisé en ce que, après la réception du signal vitre ouverte (SVO=0), le cycle de balayage est interrompu pour ramener le balai à sa position arrêt fixe, puis à sa position de parquage, avant l'inhibition de l'alimentation du moteur (M).

8. Procédé selon la revendication 6, caractérisé en ce que, après la réception du signal vitre ouverte (SVO=0), le cycle du balayage se poursuit en passant éventuellement par la position opposée arrêt fixe, puis se termine à la position arrêt fixe, une surcourse étant effectuée à partir de la position arrêt fixe pour ramener le balai à la position de parquage, avant l'inhibition de l'alimentation du moteur (M).

## Claims

1. Device for controlling the operation of an electric motor (M) driving a wiper blade on an opening window, notably a rear opening window of a motor vehicle, of the type having a unit (2) controlling the power supply to the motor whose functioning is controlled by a member (4) controlling the operation of the motor, which can be actuated by a user and is connected in series between a power supply source (5) and the control unit, and a contact (6) detecting the opening or closing of the window, the control unit (2) being adapted to demand re-starting of the motor (M) after opening and closing of the window only after re-initialisation by cutting the control member (4) and by a further action on the control member by the user, characterised in that the control unit (2) has two submodules (2a, 2b):
- the first (2a) of which receives, at one (23a) of its information inputs, a signal indicating any opening of a window, referred to as the window-open signal (SVO), emitted by the detection contact (6) which is connected to the said information input (23a), and also has a logic OR gate (OR) and a flip-flop (B) generating a signal (MI) for maintaining the inhibition of the power supply to the motor (M) until the said reinitialisation; and
- the second module (2b) of which receives, at a first (23b) of its inputs, the said window-open signal (SVO), at a second (24b) of its inputs, the said signal maintaining the inhibition (MI), and at least one other (C1, C2, C3) of its inputs a signal issuing from means (F1, F2, F3) of detecting the position of the wiper blade, the second module being adapted to control the power supply to the motor (M) according to the input signals and controlling the inhibition of the motor (M), after reception of the window-open signal (SVO=0), only when the wiper blade has been returned to a predetermined position.

2. Device according to Claim 1, in which the control unit (2) for the motor power supply is also controlled by a key contact (3) connected in series between the power supply source (5) and the control member (4), characterised in that a power supply terminal (+ APC) for the control unit is connected to the mid-point (PM) between the key contact (3) and the control member (4).

3. Method of controlling the operation of an electric motor driving a wiper blade according to Claim 1, in which a sweep cycle consists of an outward and return movement between two extreme positions, one referred to as the fixed stop and the other the opposite fixed stop, and whose parking position is situated beyond the fixed stop position requiring an overtravel of the blade to reach it, the position of the blade at one of the three positions, fixed stop, opposite fixed stop and parking, being detected by the detection means (F1, F2, F3), characterised in that, on reception of the inhibition signal, if the detection means (F1) do not detect the presence of the blade at the fixed stop position, the power supply to the motor (M) is maintained until the blade is returned to the fixed stop position.

4. Method according to Claim 3, characterised in that, after reception of the window-open signal (SVO=0), the sweep cycle is interrupted in order to return the blade to its fixed stop position before inhibition of the power supply to the motor (M).

5. Method according to Claim 3, characterised in that, after reception of the window open signal (SVO=0), the sweep cycle continues by passing if necessary through the opposite fixed stop position and then finally returns the blade to the fixed stop position, before inhibition of the power supply to the motor (M).

6. Method of controlling the operation of an electric motor driving a wiper blade according to Claim 1, in which a sweep cycle consists of an outward and return movement between two extreme positions, one referred to as the fixed stop and the other the opposite fixed stop, and whose parking position is situated beyond the fixed stop position requiring an overtravel of the blade to reach it, the position of the blade at one of the three positions, fixed stop, opposite fixed stop and parking, being detected by the detection means (F1, F2, F3), characterised in that, on reception of the window-open signal (SVO=0), if the detection means do not detect the presence of the blade at the parking position, the power supply to the motor (M) is maintained until the blade is returned to the parking position.

7. Method according to Claim 6, characterised in that, after reception of the window open signal (SVO=0), the sweep cycle is interrupted in order to return the blade to its fixed stop position, and then to its parking position, before inhibition of the power supply to the motor (M).

8. Method according to Claim 6, characterised in that, after reception of the window-open signal (SVO=0), the sweep cycle continues by passing if necessary through the opposite fixed stop position, and then ends at the fixed stop position, an overtravel being effected as from the fixed stop position in order to return the blade to the parking position, before inhibition of the power supply to the motor (M).

## Patentansprüche

1. Vorrichtung zur Steuerung des Betriebs eines Elektromotors (M) zum Antrieb eines Scheibenwischerblatts für eine zu öffnende Scheibe, insbesondere eine Heckscheibe eines Kraftfahrzeugs, umfassend eine Steuereinhëit (2) für die Stromversorgung des Motors, deren Betrieb durch ein Steuerorgan (4) für den Betrieb des Motors, das durch einen Benutzer betätigt werden kann und zwischen einer Energieversorgungsquelle (5) und der Steuereinheit in Reihe geschaltet ist, und einen Kontakt (6) zur Erfassung des Öffnens oder Schließens der Scheibe kontrolliert wird, wobei die Steuereinheit (2) geeignet ist, ein Wiedereinschalten des Motors (M) nach dem Öffnen und Schließen der Scheibe erst im Anschluß an eine Reinitialisierung durch Abschaltung des Steuerorgans (4) und durch eine erneute Betätigung des Steuerorgans durch den Benutzer zu steuern, **dadurch gekennzeichnet**,
daß die Steuereinheit (2) zwei Untermodule (2a, 2b) umfaßt, von denen:
- das erste (2a) an einem (23a) seiner Informationseingänge ein als Signal 'Scheibe offen' (SVO) bezeichnetes Signal empfängt, das jedes Öffnen der Scheibe anzeigt und das durch den Erfassungskontakt (6) übertragen wird, der an den besagten Informationseingang (23a) angeschlossen ist, und außerdem ein logisches ODER-Glied (OR) und eine Kippschaltung (B) zur Erzeugung eines Signals (MI) umfaßt, um die Sperrung der Stromversorgung des Motors (M) bis zu der besagten Reinitialisierung aufrechterhalten zu können; und von denen
- das zweite Modul (2b) an einem ersten (23b) seiner Eingänge das besagte Signal 'Scheibe offen' (SVO), an einem zweiten (24b) seiner Eingänge das besagte Signal zur Aufrechterhaltung der Sperrung (MI) und an mindestens einem anderen (C1, C2, C3) seiner Eingänge ein von Erfassungsmitteln (F1, F2, F3) zur Erfassung der Position des Scheibenwischerblatts kommendes Signal empfängt, wobei das zweite Modul geeignet ist, die Stromversorgung des Motors (M) in Abhängigkeit von den Eingangssignalen zu steuern, und die Sperrung des Motors (M) nach Empfang des Signals 'Scheibe offen' (SVO=0) erst dann steuert, wenn das Scheibenwischerblatt zu einer vorbestimmten Position zurückgebracht worden ist.

2. Vorrichtung nach Anspruch 1, bei der die Steuereinheit (2) für die Stromversorgung des Motors außerdem durch einen Schlüsselkontakt (3) kontrolliert wird, der zwischen der Energieversorgungsquelle (5) und dem Steuerorgan (4) in Reihe geschaltet ist, **dadurch gekennzeichnet,** daß eine Energieversorgungsklemme (+ APC) der Steuereinheit an den Mittelpunkt (PM) zwischen dem Schlüsselkontakt (3) und dem Steuerorgan (4) angeschlossen ist.

3. Verfahren zur Steuerung des Betriebs eines Elektromotors zum Antrieb eines Scheibenwischerblatts nach Anspruch 1, bei dem ein Wischzyklus aus einer Hin- und Herbewegung zwischen zwei Endpositionen, und zwar einer sogenannten festen Abschaltposition und einer zur festen Abschaltposition entgegengesetzten Position, besteht und dessen Parkstellung sich jenseits der festen Abschaltposition befindet, so daß für deren Erreichung eine zusätzliche Bewegung des Wischerblatts erforderlich ist, wobei die Position des Wischerblatts in einer der drei Positionen, feste Abschaltposition, zur festen Abschaltposition entgegengesetzte Position und Parkstellung, durch die Erfassungsmittel (F1, F2, F3) erfaßt wird, **dadurch gekennzeichnet,** daß beim Empfang des Sperrsignals die Stromversorgung des Motors (M), wenn die Erfassungsmittel (F1) nicht die Präsenz des Scheibenwischerblatts in der festen Abschaltposition erfassen, aufrechterhalten wird, bis das Scheibenwischerblatt zur festen Abschaltposition zurückgebracht wird.

4. Verfahren nach Anspruch 3 , **dadurch gekennzeichnet,** daß nach dem Empfang des Signals 'Scheibe offen' (SVO=0) der Wischzyklus unterbrochen wird, um das Scheibenwischerblatt zu seiner festen Abschaltposition vor der Sperrung der Stromversorgung des Motors (M) zurückzubringen.

5. Verfahren nach Anspruch 3 , **dadurch gekennzeichnet,** daß nach dem Empfang des Signals 'Scheibe offen' (SVO=0) der Wischzyklus, gegebenenfalls mit Durchgang durch die zur festen Abschaltposition entgegengesetzte Position, fortgesetzt und danach das Scheibenwischerblatt abschließend zur festen Abschaltposition zurückgebracht wird, bevor die Sperrung der Stromversorgung des Motors (M) erfolgt.

6. Verfahren zur Steuerung des Betriebs eines Elektromotors zum Antrieb eines Scheibenwischerblatts nach Anspruch 1, bei dem ein Wischzyklus aus einer Hin- und Herbewegung zwischen zwei Endpositionen, und zwar einer sogenannten festen Abschaltposition und einer zur festen Abschaltposition entgegengesetzten Position, besteht und dessen Parkstellung sich jenseits der festen Abschaltposition befindet, so daß für deren Erreichung eine zusätzliche Bewegung des Wischerblatts erforderlich ist, wobei die Position des Wischerblatts in einer der drei Positionen, feste Abschaltposition, zur festen Abschaltposition entgegengesetzte Position und Parkstellung, durch die Erfassungsmittel (F1, F2, F3) erfaßt wird, **dadurch gekennzeichnet,** daß beim Empfang des Signals 'Scheibe offen' (SVO=0) die Stromversorgung des Motors (M), wenn die Erfassungsmittel nicht die Präsenz des Scheibenwischerblatts in der Parkstellung erfassen, aufrechterhalten wird, bis das Scheibenwischerblatt zur Parkstellung zurückgebracht wird.

7. Verfahren nach Anspruch 6 , **dadurch gekennzeichnet,** daß nach dem Empfang des Signals 'Scheibe offen' (SVO=0) der Wischzyklus unterbrochen wird, um das Scheibenwischerblatt zu seiner festen Abschaltposition und anschließend zu seiner Parkstellung vor der Sperrung der Stromversorgung des Motors (M) zurückzubringen.

8. Verfahren nach Anspruch 6 , **dadurch gekennzeichnet,** daß nach dem Empfang des Signals 'Scheibe offen' (SVO=0) der Wischzyklus, gegebenenfalls mit Durchgang durch die zur festen Abschaltposition entgegengesetzte Position, fortgesetzt wird und anschließend in der festen Abschaltposition endet, wobei eine zusätzliche Bewegung von der festen Abschaltposition aus ausgeführt wird, um das Wischerblatt in die Parkstellung zurückzubringen, bevor die Sperrung der Stromversorgung des Motors (M) erfolgt.
